# EUROPEAN PATENT APPLICATION

(11) **EP 4 578 629 A2**
(43) Date of publication of application: **02.07.2025**
(21) Application number: 24219637.6
(22) Date of filing: 13.12.2024
(51) Int. Cl.: B29C 49/56

(54) **OPERATION MECHANISM, BLOW MOLDING MECHANISM, SPLIT MOLD, AND MOLD UNIT**

(30) Priority: 28.12.2023 JP 2023222952
(71) Applicant: Sumitomo Heavy Industries, Ltd., Tokyo 141-6025 (JP)
(72) Inventor: YONEZUKA, Shun, Chiba, 263-0001 (JP); TAKAHASHI, Rei, Chiba, 263-0001 (JP)
(74) Representative: Louis Pöhlau Lohrentz

(57) **Abstract**

Occurrence of scratching or gnawing at a boundary portion (100, 400) between members that operate in a direction perpendicular to a direction in which a stationary mold and a movable mold of a mold unit are closed and opened is suppressed. A blow molding mechanism (1) includes a first split mold (11) that is a first member which is a member operating in a second direction perpendicular to a first direction in which a stationary mold and a movable mold are closed and opened, a second split mold (12) that is a member which operates in the second direction and that is a second member which does not come into contact with the first split mold (11), and a sliding member (13) that is attachably and detachably fixed to the second split mold (12) and that is slidable with respect to the first split mold (11).

## Description

### BACKGROUND OF THE INVENTION

### Field of the Invention

The present invention relates to an operation mechanism, a blow molding mechanism, a split mold, and a mold unit.

### Description of Related Art

In injection blow molding, which is a molding technique in which injection molding and blow molding are performed in two stages, a preform, which is an intermediate molding product, is molded through the injection molding, and a final molding product such as a container is molded by blowing air into the preform and extending the preform through the blow molding. In the blow molding, a split mold that can be separated into a plurality of molds is used (for example, Japanese Patent No. 4425750). The split mold is closed and opened in a direction perpendicular to a direction in which a mold unit is closed and opened. In addition, the split mold is configured by a plurality of split molds in some cases.

### SUMMARY OF THE INVENTION

In a case where the split mold is configured by the plurality of split molds, a gap at a boundary portion between the split molds adjacent to each other causes a molding defect. Therefore, it is necessary to close and open the split molds adjacent to each other in a state of being in contact with each other. However, due to the configuration, in a case where it is necessary to shift a timing of starting to open the split molds adjacent to each other, sliding occurs at the boundary portion between the split molds adjacent to each other. In addition, the boundary portion between the split molds adjacent to each other is also a portion where a contact pressure is increased due to an effect of a mold clamping force of the mold unit. For this reason, since the boundary portion between the split molds adjacent to each other slides in a state where the contact pressure is high, there is a high risk of occurrence of scratching or gnawing.

An object of the present invention is to suppress the occurrence of scratching or gnawing at a boundary portion between members that operate in a direction perpendicular to a direction in which a stationary mold and a movable mold of a mold unit are closed and opened.

According to an aspect of the present invention, in order to achieve such an object, there is provided an operation mechanism including a first member that is a member which operates in a second direction perpendicular to a first direction in which a stationary mold and a movable mold are closed and opened, a second member that is a member which operates in the second direction and that does not come into contact with the first member, and a sliding member that is attachably and detachably fixed to the second member and that is slidable with respect to the first member.

Herein, the first member and the sliding member may have hardness higher than hardness of the second member.

In addition, the sliding member may have hardness higher than hardness of the first member.

In addition, the first member may have hardness higher than hardness of the sliding member.

In addition, the first member may be a first split mold that is a split mold which is closed and opened in the second direction, and the second member may be a second split mold that is a split mold which does not come into contact with the first split mold.

In addition, according to another aspect of the present invention, there is provided a blow molding mechanism including a first split mold that molds and grips a part of an intermediate molding product, among split molds that configure a part of a mold used in blow molding on the intermediate molding product, that are closed before start of the blow molding, and that are opened after the blow molding is completed, a second split mold that is the split mold which is opened after the blow molding is completed and then the first split mold is opened and that molds and grips a part of the intermediate molding product, and a sliding member that is attachably and detachably joined to the first split mold and that is slidable with respect to the second split mold, in which a direction in which the first split mold and the second split mold are closed and opened is perpendicular to a direction in which a stationary mold and a movable mold are closed and opened.

In addition, according to still another aspect of the present invention, there is provided a split mold including an operation mechanism, in which the operation mechanism includes a first member that is a member which operates in a second direction perpendicular to a first direction in which a stationary mold and a movable mold are closed and opened, a second member that is a member which operates in the second direction and that does not come into contact with the first member, and a sliding member that is attachably and detachably fixed to the second member and that is slidable with respect to the first member.

In addition, according to still another aspect of the present invention, there is provided a mold unit including a stationary mold, an intermediate mold that includes an operation mechanism, and a movable mold, in which the operation mechanism includes a first member that is a member which operates in a second direction perpendicular to a first direction in which the stationary mold and the movable mold are closed and opened, a second member that is a member which operates in the second direction and that does not come into contact with the first member, and a sliding member that is attachably and detachably fixed to the second member and that is slidable with respect to the first member.

With the present invention, occurrence of scratching or gnawing at the boundary portion between the members that operate in the direction perpendicular to the direction in which the stationary mold and the movable mold of the mold unit are closed and opened can be suppressed.

### BRIEF DESCRIPTION OF THE DRAWINGS

Fig. 1 is a cross-sectional view showing an example of a configuration of a blow molding mechanism according to the present embodiment.
Fig. 2 is a view showing an example of an operation in which a second split mold and a sliding member fixed to the second split mold are opened and closed.
Fig. 3 is a cross-sectional view showing an example of a configuration of a blow molding mechanism of the related art.

### DETAILED DESCRIPTION OF THE INVENTION

Hereinafter, an embodiment of the present invention will be described in detail with reference to the accompanying drawings.

### <Configuration of Blow Molding Mechanism>

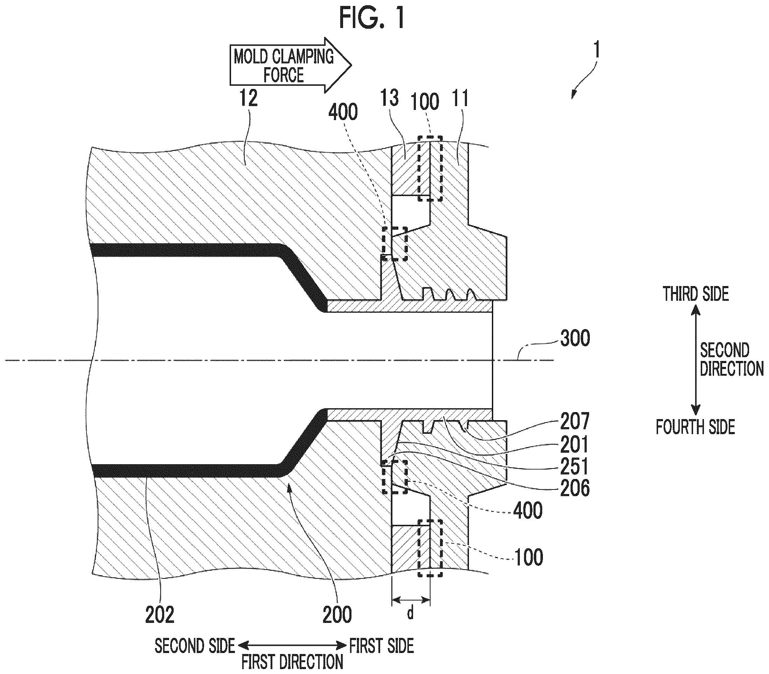

Fig. 1 is a cross-sectional view showing an example of a configuration of a blow molding mechanism 1 according to the present embodiment. Fig. 1 shows a state where the blow molding mechanism 1 is viewed from a top side toward a bottom side in a top-bottom direction. For this reason, a front side of the drawing of Fig. 1 is the top side in the top-bottom direction, and a rear side of the drawing is the bottom side in the top-bottom direction.

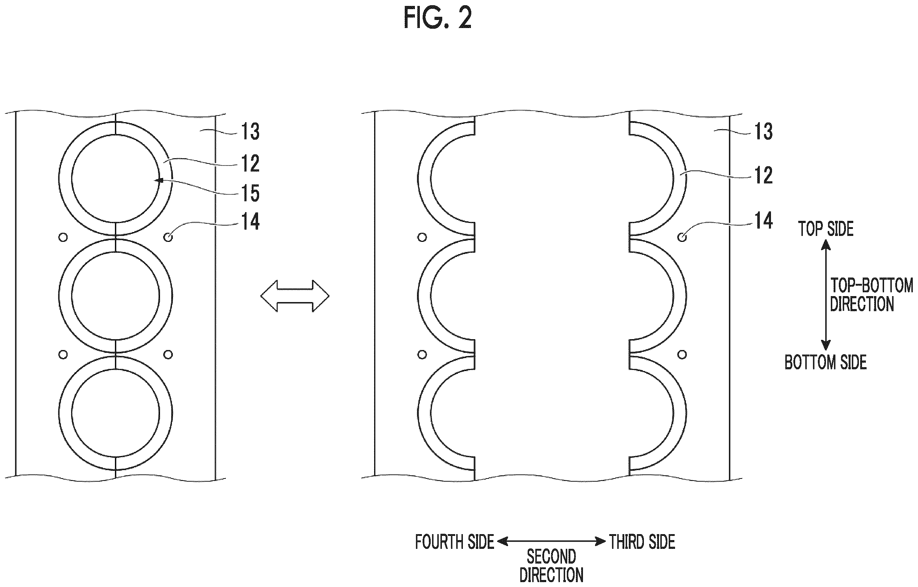

Fig. 2 is a view showing an example of an operation in which a second split mold 12 and a sliding member 13 fixed to the second split mold 12 are opened and closed. Although a first split mold 11 is not shown in Fig. 2, the first split mold 11 is actually disposed on the front side of the drawing of Fig. 2.

The blow molding mechanism 1 shown in Fig. 1 is a mechanism applied to an intermediate mold and a movable mold that are included in a mold unit which performs injection blow molding. The intermediate mold to which the blow molding mechanism 1 is applied is a so-called rotating mold that is disposed between a stationary mold and a movable mold (not shown). Specifically, the stationary mold is disposed on a first side in a first direction with respect to the intermediate mold. In addition, the movable mold is disposed on a second side in the first direction with respect to the intermediate mold. The injection blow molding refers to a molding technique in which injection molding and blow molding are performed in two stages. The injection molding is performed in a state where the stationary mold and the intermediate mold are closed. In addition, the blow molding is performed in a state where the movable mold and the intermediate mold are closed.

In the injection blow molding, first, a preform (not shown) which is an intermediate molding product is molded in the injection molding which is first stage molding. Next, in blow molding, which is a second stage molding, high-pressure air is blown into the preform and the preform is extended, thereby molding a final molding product. Examples of a technique of blowing air into the preform through the blow molding include a technique of causing an extension rod (not shown) that can output the high-pressure air to protrude into the preform.

Fig. 1 shows a cylindrical bottle container 200 that is a final molding product subjected to blow molding in a mold in a closed state. A direction of an axis 300 of the bottle container 200 in a closed state is a right-left direction of the drawing and is the same direction as a direction in which the intermediate mold and the movable mold to which the blow molding mechanism 1 is applied are opened and closed. Hereinafter, the direction in which the intermediate mold and the movable mold to which the blow molding mechanism 1 is applied are opened and closed (the right-left direction of the drawing of Fig. 1) will be called the "first direction". Further, a right side of the drawing in the first direction will be called the "first side", and a left side of the drawing in the first direction will be called the "second side". In addition, a direction perpendicular to the first direction (an up-down direction of the drawing in Fig. 1) will be called a "second direction". Further, an upper side of the drawing in the second direction will be called a "third side", and a lower side of the drawing in the second direction will be called a "fourth side".

A filled portion of a cross section of the bottle container 200 indicates a portion where the preform is extended through the blow molding. However, in reality, a portion that is extended through the blow molding and a portion that is not extended are not clearly distinguished from each other. For this reason, a boundary portion between the filled portion and a hatched portion in the cross section of the bottle container 200 of Fig. 1 merely indicates an approximate position.

The bottle container 200 includes a mouth portion 201 and a main body 202. The mouth portion 201 and the main body 202 are names of parts of the shape of the bottle container 200 having continuity, and there is no clear boundary. For this reason, in the present embodiment, the mouth portion 201 is a portion that is gripped by the first split mold 11 to be described later and that is subjected to injection molding. Specifically, the mouth portion 201 is a portion including near an end portion of the bottle container 200 on the first side in the first direction, that is, a surface 251 of a protrusion portion 206, which protrudes in a direction separated from the axis 300, of the bottle container 200 on the first side in the first direction and a male screw 207 which is screwed into a female screw of a cap (not shown) of the bottle container 200. In addition, the main body 202 is a portion molded by the second split mold 12 to be described later. Specifically, the main body 202 is a portion other than the mouth portion 201 of the bottle container 200.

The blow molding mechanism 1 includes the first split mold 11 and the second split mold 12, which are molds. The first split mold 11 is a split mold that can be opened and closed in the second direction and functions as a mold that configures the intermediate mold for performing injection molding and blow molding. The first split mold 11 molds the mouth portion 201 in a closed state during the injection molding and grips the mouth portion 201 in the closed state during the blow molding. In addition, the first split mold 11 is opened to release the mouth portion 201 after the blow molding is completed. The first split mold 11 is also called a mouth portion split mold or a split.

The second split mold 12 is a split mold that can be opened and closed in the second direction and functions as a mold that configures a movable mold which performs blow molding. The second split mold 12 molds the main body 202 in a closed state during the blow molding. In addition, the second split mold 12 is opened to release the main body 202 after the blow molding is completed. The second split mold 12 is also called a blow split mold. In Fig. 1, a boundary portion 400 between the first split mold 11 and the second split mold 12 is shown as if the first split mold 11 and the second split mold 12 are in contact with each other. However, in reality, a slight gap that does not affect quality of a molding product is formed. For this reason, the first split mold 11 and the second split mold 12 are not in contact with each other.

In addition, the blow molding mechanism 1 includes the sliding member 13 between the first split mold 11 and the second split mold 12. The sliding member 13 is attachably and detachably fixed to the second split mold 12 and is slidable with respect to the first split mold 11. The sliding member 13 is configured by a member that has a thickness determined in advance in the first direction and that is made of a metal having high abrasion resistance. A material for the sliding member 13 is not particularly limited, and is configured by, for example, a so-called non-oil supply plate and the like, in which a solid lubricant is blended in a material and which does not require supply of the lubricant. As shown in Fig. 2, the sliding member 13 is attachably and detachably fixed to the second split mold 12 by a bolt 14. However, a technique of fixing the sliding member 13 to the second split mold 12 is not limited to a technique of fixing with the bolt 14.

Returning to Fig. 1, when the second split mold 12 is opened and closed in the second direction, the sliding member 13 is opened and closed together with the second split mold 12 in a state of being fixed to the second split mold 12. When opening and closing the sliding member 13, the sliding member 13 is opened and closed while sliding with respect to the first split mold 11 at a boundary portion 100 between the first split mold 11 and the sliding member 13.

A thickness d of the sliding member 13 in the first direction is designed as follows. That is, the thickness d is designed such that the first split mold 11 and the second split mold 12 are not in contact with each other in a state where the sliding member 13 is fixed to the second split mold 12 and the first split mold 11 is slidable with respect to the sliding member 13.

In a left view of Fig. 2, a state where the second split mold 12 is closed is shown. As described above, the sliding member 13 is fixed to the second split mold 12 by the bolt 14. A preform is disposed in a circular hole 15 formed in a state where the second split mold 12 is closed. When blow molding is performed on the preform, the preform is extended, and the bottle container 200 (see Fig. 1) is molded. The sliding member 13 forms a circular hole having a diameter larger than a diameter of the hole 15 of the second split mold 12 in a state of being closed in the second direction.

In a right view of Fig. 2, a state where the second split mold 12 is opened in the second direction is shown. When blow molding is completed, first, the first split mold 11 (see Fig. 1) that has gripped the mouth portion 201 of the bottle container 200 starts to open in the second direction. Accordingly, the mouth portion 201 of the bottle container 200 is released. Immediately after that, the second split mold 12 that has gripped the main body 202 of the bottle container 200 starts to open in the second direction. Accordingly, the main body 202 of the bottle container 200 is released. Then, the bottle container 200 starts free falling toward the bottom side in the top-bottom direction. In this manner, the mold for performing the blow molding and the bottle container 200, which is the final molding product, are separated from each other.

Returning to Fig. 1, in the blow molding mechanism 1, as described above, first, the first split mold 11 starts to open and immediately thereafter, the second split mold 12 starts to open. Accordingly, the bottle container 200 is separated from the mold for performing the blow molding. Sliding occurs at the boundary portion 100 between the first split mold 11 and the sliding member 13 when the first split mold 11 starts to open. On the contrary, a distance is provided at the boundary portion 400 between the first split mold 11 and the second split mold 12 to such an extent that sliding does not occur.

### <Comparative Example>

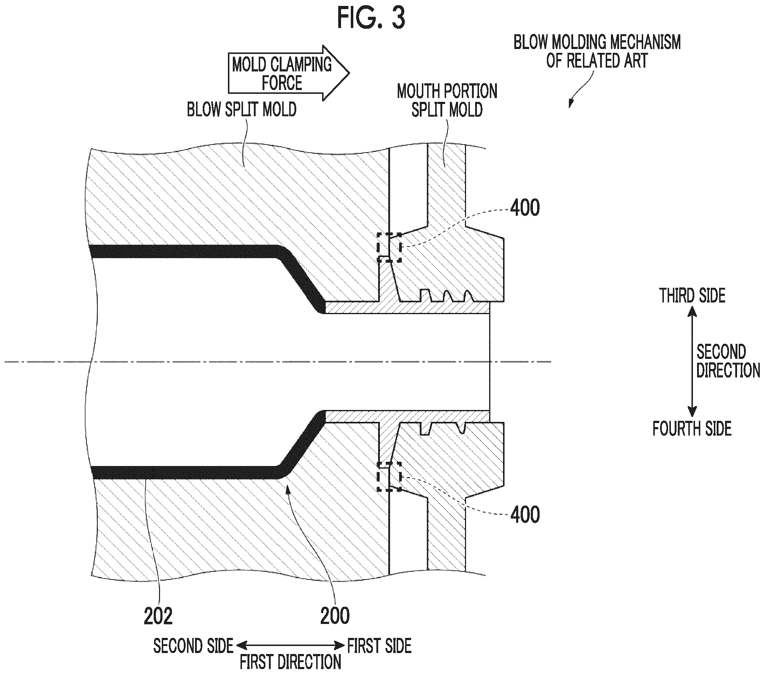

Fig. 3 is a cross-sectional view showing an example of a configuration of a blow molding mechanism of the related art.

The blow molding mechanism of the related art shown in Fig. 3 includes each of a mouth portion split mold and a blow split mold corresponding to the first split mold 11 and the second split mold 12 of the blow molding mechanism 1, respectively, which are shown in Fig. 1 described above. However, the blow molding mechanism of the related art shown in Fig. 3 does not include the sliding member 13 (see Fig. 1) unlike the blow molding mechanism 1 of Fig. 1. In addition, in the blow molding mechanism of the related art shown in Fig. 3, sliding occurs at the boundary portion 400 between the mouth portion split mold and the blow split mold, unlike in the blow molding mechanism 1 of in Fig. 1.

The boundary portion 400 between the mouth portion split mold and the blow split mold in the blow molding mechanism of the related art shown in Fig. 3 is affected by a mold clamping force in the first direction generated when a mold unit is clamped, and thus, a contact pressure is increased. For this reason, there is a high risk of occurrence of scratching or gnawing caused by sliding. In particular, in a case where the hardness of the blow split mold is low with respect to the mouth portion split mold, scratching or gnawing is likely to occur in the blow split mold. As a technique for suppressing the occurrence of scratching or gnawing in the blow split mold, a technique of changing a material for the blow split mold to a material having high hardness is conceivable. However, when a material for the blow split mold having high hardness is used, machinability of the mold of the blow split mold is degraded.

On the contrary, the blow molding mechanism 1 of Fig. 1 described above has a configuration where sliding is possible at the boundary portion 100 between the sliding member 13 fixed to the second split mold 12 and the first split mold 11 and contact does not occur at the boundary portion 400 between the first split mold 11 and the second split mold 12. For this reason, a mold clamping force is generated when the mold unit is clamped also in the blow molding mechanism 1 of Fig. 1 as in the blow molding mechanism of the related art shown in Fig. 3, but the problem described above is unlikely to occur.

Herein, in the blow molding mechanism 1 of Fig. 1, sliding occurs at the boundary portion 100 between the sliding member 13 and the first split mold 11, and thus there is a possibility in which scratching or gnawing occurs at the boundary portion 100. However, even when scratching or gnawing occurs at the boundary portion 100, unlike the boundary portion 400, the boundary portion 100 is positioned relatively far from the bottle container 200, which is a product, and accordingly, a risk of attachment of abrasion powder generated due to contact to the bottle container 200 is low. In addition, the first split mold 11 and the sliding member 13 are formed of a material having abrasion resistance and high hardness. In this manner, a risk of the occurrence of scratching or gnawing at the boundary portion 100 can be reduced.

A relationship between the hardness of the first split mold 11, the hardness of the second split mold 12, and the hardness of the sliding member 13 in the blow molding mechanism 1 is not particularly limited. For example, the following relationship can be given as an example. That is, a material having hardness higher than hardness of the second split mold 12 may be adopted for the first split mold 11 and the sliding member 13. Accordingly, since the material having hardness higher than hardness of the second split mold 12 can be adopted for the first split mold 11 and the sliding member 13, the occurrence of abrasion, scratching, and gnawing can be suppressed. In addition, since the second split mold 12 is a member that does not slide against any one of the first split mold 11 and the sliding member 13, scratching or gnawing caused by sliding does not occur in the first place. As a result, since a material that has low hardness and that is easy to be processed can be adopted, machinability can be improved.

In addition, in a case where the hardness of the second split mold 12 can be made low, it is not necessary to perform heat treatment or plating in order to increase the hardness of the second split mold 12. Therefore, dimensional stability of the second split mold 12 improves. That is, when heat treatment is performed on the second split mold 12, there is a possibility in which stress generated inside during cooling after heat treatment causes a change in the shape, which is so-called "warping", and makes dimensions of the second split mold 12 unstable. In addition, when plating is performed on the second split mold 12, there is a possibility in which plating is peeled off without withstanding sliding in a state where the mold clamping force of the mold unit is generated. When it is not necessary to perform heat treatment or plating, a risk of occurrence of such a problem is suppressed.

In addition, a material having hardness higher than hardness of the first split mold 11 may be adopted for the sliding member 13. Accordingly, even when contact with the boundary portion 100 between the first split mold 11 and the sliding member 13 occurs, the sliding member 13 is unlikely to be abraded. The sliding member 13 has a constraint on a shape, such as the thickness d in the first direction, a length in the second direction, and a length in the top-bottom direction, and a constraint on a material, compared to the first split mold 11. For this reason, the sliding member 13 tends to have a higher frequency of maintenance such as replacement than the first split mold 11 has, and the frequency of maintenance such as replacement can be reduced by increasing the hardness of the sliding member 13 than hardness of the first split mold 11.

On the contrary, for example, in a case where the sliding member 13 is treated as a member that is intended for regular replacement due to abrasion, scratching, gnawing, and the like, a material having hardness higher than hardness of the sliding member 13 may be adopted for the first split mold 11. In this case, since a material for the first split mold 11 can be a material having hardness higher than hardness of the second split mold 12, even when contact with the boundary portion 100 between the first split mold 11 and the sliding member 13 occurs, the first split mold 11 is unlikely to be abraded. That is, while it is assumed that the replacement of the sliding member 13 is relatively easy and maintenance costs do not increase, maintainability of the first split mold 11, of which replacement is not easy and maintenance costs are high, can be prioritized. Therefore, there is an advantage in terms of costs and operation.

In summary, an operation mechanism to which the present invention is applied can be configured as follows, and various embodiments can be adopted.

That is, the blow molding mechanism 1, which is the operation mechanism according to the present embodiment, is a blow molding mechanism including the first split mold 11 that is a first member which is a member operating in the second direction perpendicular to the first direction in which the stationary mold and the movable mold are closed and opened, the second split mold 12 that is a member which operates in the second direction and that is a second member which does not come into contact with the first split mold 11, and the sliding member 13 that is attachably and detachably fixed to the second split mold 12 and that is slidable with respect to the first split mold 11.

Accordingly, the blow molding mechanism 1, which is the operation mechanism, includes the first split mold 11 that is the first member which operates in the second direction perpendicular to the first direction in which the stationary mold and the movable mold are closed and opened and the second split mold 12 that is the second member which operates in the second direction and which does not come into contact with the first split mold 11, and the sliding member 13 that is slidable with respect to the first split mold 11 is attachably and detachably fixed to the second split mold 12. As a result, the occurrence of scratching or gnawing at the boundary portion 400 between the first split mold 11 that is the first member which operates in the second direction and the second split mold 12 that is the second member can be suppressed.

Herein, the first split mold 11 and the sliding member 13 may have hardness higher than hardness of the second split mold 12.

Accordingly, since the hardness of the second split mold 12 that does not slide with respect to any one of the first split mold 11 and the sliding member 13 can be lowered, machinability of the second split mold 12 can be improved. Further, in a case where the hardness of the second split mold 12 can be made low, it is not necessary to perform heat treatment or plating in order to increase the hardness of the second split mold 12. As a result, as described above, the dimensional stability of the second split mold 12 improves. In addition, since the first split mold 11 and the sliding member 13 can adopt a material having hardness higher than hardness of the second split mold 12, the occurrence of abrasion, scratching, and gnawing can be suppressed.

In addition, the sliding member 13 may have hardness higher than hardness of the first split mold 11.

Accordingly, even when contact with the boundary portion 100 between the first split mold 11 and the sliding member 13 occurs, the sliding member 13 is unlikely to be abraded. Therefore, the frequency of replacing the sliding member 13 can be reduced.

In addition, the first split mold 11 may have hardness higher than hardness of the sliding member 13.

Accordingly, since a material for the first split mold 11 can be a material having hardness higher than hardness of the second split mold 12, even when contact with the boundary portion 100 between the first split mold 11 and the sliding member 13 occurs, the first split mold 11 is unlikely to be abraded.

In addition, the blow molding mechanism 1 to which the present invention is applied is a blow molding mechanism including, among split molds that configure a part of a mold used in blow molding on a preform, which is an intermediate molding product, that are closed before start of the blow molding, and that is opened after the blow molding is completed, the first split mold 11 that molds and grips a part of the intermediate molding product, the second split mold 12 that is a split mold which is opened after the blow molding is completed and then the first split mold 11 is opened and that molds and grips a part of the preform, and the sliding member 13 that is attachably and detachably joined to the first split mold 11 and that is slidable with respect to the second split mold 12, in which the direction in which the first split mold 11 and the second split mold 12 are closed and opened is perpendicular to the direction in which the stationary mold and the movable mold are closed and opened.

Accordingly, the blow molding mechanism 1 includes the first split mold 11 that is opened in the second direction perpendicular to the first direction in which the stationary mold and the movable mold are closed and opened and the second split mold 12 that is opened in the second direction and that does not come into contact with the first split mold 11, and the sliding member 13 that is slidable with respect to the first split mold 11 is attachably and detachably fixed to the second split mold 12. As a result, the occurrence of scratching or gnawing at the boundary portion 400 between the first split mold 11 and the second split mold 12 that are opened in the second direction can be suppressed.

In addition, the split mold to which the present invention is applied is a split mold including the blow molding mechanism 1, which is the operation mechanism, in which the blow molding mechanism 1 includes the first split mold 11 that is the first member which is the member operating in the second direction perpendicular to the first direction in which the stationary mold and the movable mold are opened and closed, the second split mold 12 that is a member which operates in the second direction and that is the second member which does not come into contact with the first split mold 11, and the sliding member 13 that is attachably and detachably fixed to the second split mold 12 and that is slidable with respect to the first split mold 11, and the direction in which the first split mold 11 and the second split mold 12 are opened and closed is perpendicular to the direction in which the stationary mold and the movable mold are opened and closed.

Accordingly, the blow molding mechanism 1 of the split mold includes the first split mold 11 that is the first member which operates in the second direction perpendicular to the first direction in which the stationary mold and the movable mold are closed and opened and the second split mold 12 that is the second member which operates in the second direction and which does not come into contact with the first split mold 11, and the sliding member 13 that is slidable with respect to the first split mold 11 is attachably and detachably fixed to the second split mold 12. As a result, the occurrence of scratching or gnawing at the boundary portion 400 between the first split mold 11 that is the first member which operates in the second direction and the second split mold 12 that is the second member can be suppressed.

In addition, the mold unit to which the present invention is applied is a mold unit including the stationary mold, the intermediate mold including the blow molding mechanism 1 that is an operation mechanism, and the movable mold, in which the blow molding mechanism 1 includes the first split mold 11 that is the first member which is the member operating in the second direction perpendicular to the first direction in which the stationary mold and the movable mold are closed and opened, the second split mold 12 that is a member which operates in the second direction and that is the second member which does not come into contact with the first split mold 11, and the sliding member 13 that is attachably and detachably fixed to the second split mold 12 and that is slidable with respect to the first split mold 11, and the direction in which the first split mold 11 and the second split mold 12 are closed and opened is perpendicular to the direction in which the stationary mold and the movable mold are closed and opened.

Accordingly, the blow molding mechanism 1 of the intermediate mold and the movable mold included in the mold unit includes the first split mold 11 that is the first member which operates in the second direction perpendicular to the first direction in which the stationary mold and the movable mold are closed and opened and the second split mold 12 that is the second member which operates in the second direction and which does not come into contact with the first split mold 11, and the sliding member 13 that is slidable with respect to the first split mold 11 and that is attachably and detachably fixed to the second split mold 12. As a result, the occurrence of scratching or gnawing at the boundary portion 400 between the first split mold 11 that is the first member which operates in the second direction and the second split mold 12 that is the second member can be suppressed.

### <Others>

Although the embodiment of the present invention has been described hereinbefore, the present invention is not limited to the embodiment described above. In addition, the effects of the present invention are also not limited to those described in the embodiment described above. For example, the configurations of the blow molding mechanism 1 shown in Fig. 1 are merely examples for achieving the object of the present invention and are not particularly limited. In addition, a state where the second split mold 12 to which the sliding member 13 is fixed operates, which is shown in Fig. 2, is also merely an example and is not particularly limited.

For example, although the final molding product is the bottle container 200 in the embodiment described above, the final molding product need not be the bottle container. Other molding products may be molded through injection blow molding, which is a molding technique of performing injection molding and blow molding in two stages.

In addition, it is assumed that the blow molding mechanism 1 according to the embodiment described above is applied to a device that performs injection blow molding, but can also be applied to a device that performs only blow molding.

In addition, a configuration where the second split mold 12 starts to open immediately after the first split mold 11 starts to open is adopted in the embodiment described above, but order in which mold opening is started is not particularly limited. That is, a configuration where the second split mold 12 starts to open first before the first split mold 11 starts to open may be adopted, or a configuration where the first split mold 11 and the second split mold 12 start to open simultaneously may be adopted.

In addition, an example in which the present invention is applied to the mold unit including the intermediate mold has been described in the embodiment described above, but the blow molding mechanism 1 can also be applied to a mold unit that does not include the intermediate mold. For example, the present invention can also be applied to a mold unit including a stationary mold and a movable mold, in which a split mold is closed and opened in a state where a certain contact pressure or higher caused by mold clamping is applied to the split mold.

In addition, a case where the first member according to the present invention is the first split mold 11, and the second member according to the present invention is the second split mold 12 has been described in the embodiment described above, but this is merely an example. The first member according to the present invention is the member that configures the mold unit and may be a member that operates in the second direction perpendicular to the first direction in which the stationary mold and the movable mold of the mold unit are closed and opened. In addition, the second member according to the present invention is also the member that configures the mold unit, is the member that operates in the second direction perpendicular to the first direction in which the stationary mold and the movable mold of the mold unit are closed and opened, and may be the member that does not come into contact with the first member.

### Brief Description of the Reference Symbols

1: blow molding mechanism
11: first split mold
12: second split mold
13: sliding member
14: bolt
15: hole
100, 400: boundary portion
200: bottle container
201: mouth portion
202: main body

## Claims

1. An operation mechanism comprising:
a first member that is a member which operates in a second direction perpendicular to a first direction in which a stationary mold and a movable mold are closed and opened;
a second member that is a member which operates in the second direction and that does not come into contact with the first member; and
a sliding member (13) that is attachably and detachably fixed to the second member and that is slidable with respect to the first member.

2. The operation mechanism according to claim 1,
wherein the first member and the sliding member (13) have hardness higher than hardness of the second member.

3. The operation mechanism according to claim 2,
wherein the sliding member (13) has hardness higher than hardness of the first member.

4. The operation mechanism according to claim 2,
wherein the first member has hardness higher than hardness of the sliding member (13).

5. The operation mechanism according to any one of claims 1 to 4,
wherein the first member is a first split mold (11) that is a split mold which is closed and opened in the second direction, and the second member is a second split mold (12) that is a split mold which does not come into contact with the first split mold (11).

6. A blow molding mechanism (1) comprising:
a first split mold (11) that molds and grips a part of an intermediate molding product, among split molds that configure a part of a mold used in blow molding on the intermediate molding product, that are closed before start of the blow molding, and that are opened after the blow molding is completed;
a second split mold (12) that is the split mold which is opened after the blow molding is completed and then the first split mold (11) is opened and that molds and grips a part of the intermediate molding product; and
a sliding member (13) that is attachably and detachably joined to the first split mold (11) and that is slidable with respect to the second split mold (12),
wherein a direction in which the first split mold (11) and the second split mold (12) are closed and opened is perpendicular to a direction in which a stationary mold and a movable mold are closed and opened.

7. A split mold comprising:
an operation mechanism,
wherein the operation mechanism includes
a first member that is a member which operates in a second direction perpendicular to a first direction in which a stationary mold and a movable mold are closed and opened,
a second member that is a member which operates in the second direction and that does not come into contact with the first member, and
a sliding member (13) that is attachably and detachably fixed to the second member and that is slidable with respect to the first member.

8. A mold unit comprising:
a stationary mold;
an intermediate mold that includes an operation mechanism; and
a movable mold,
wherein the operation mechanism includes
a first member that is a member which operates in a second direction perpendicular to a first direction in which the stationary mold and the movable mold are closed and opened,
a second member that is a member which operates in the second direction and that does not come into contact with the first member, and
a sliding member (13) that is attachably and detachably fixed to the second member and that is slidable with respect to the first member.
